# EUROPEAN PATENT SPECIFICATION

(11) **EP 1 422 691 B1**
(45) Date of publication and mention of the grant of the patent: **02.01.2008**
(21) Application number: 02025735.8
(22) Date of filing: 15.11.2002
(51) Int. Cl.: G10L 15/06, G10L 15/18

(54) **Method for adapting a speech recognition system**
Verfahren zur Anpassung eines Spracherkennungssystems
Méthode d'adaptation d'un système de reconnaissance de la parole

(43) Date of publication of application: 26.05.2004
(73) Proprietor: Sony Deutschland GmbH, 10785 Berlin (DE)
(72) Inventor: Goronzy, Silke, Advanced Technol. Center Stuttgart, 70327 Stuttgart (DE); Kompe, Ralf, Advanced Technology Center Stuttgart, 70327 Stuttgart (DE); Möhler, Gregor, Advanced Technol. Center Stuttgart, 70327 Stuttgart (DE); Kemp, Thomas, Advanced Technology Center Stuttgart, 70327 Stuttgart (DE); Lam, Yin Hay, Advanced Technology Center Stuttgart, 70327 Stuttgart (DE); Marasek, Krzysztof, Advanced Tec. Center Stuttgart, 70327 Stuttgart (DE)
(74) Representative: Müller - Hoffmann & Partner

(56) References cited:
- EP-A- 0 917 129
- EP-A- 1 213 706
- US-B1- 6 219 638

## Description

The invention relates to a method for operating a speech processing system.

Today's speech recognition and processing systems generally use a lexicon in order to match a recognized string of phonemes to words, i. e. all words known to the system are stored in the lexicon (dictionary) together with the respective pronunciation. In most lexicons only the canonical pronunciation forms of the known words are stored. The canonical pronunciation form of a word is the "standard" way of pronouncing these words. However, if words are spoken in a sentence by a speaker, he/she may change the pronunciation form of a word and may not use the canonical pronunciation form. This may lead to a problem, in particular to recognition mistakes, because the pronunciation form used by a speaker may not be found in a dictionary which only contains the canonical pronunciation forms. Therefore, there exist techniques to derive pronunciation variants that are typical, if connected words or spontaneous speech are spoken in e.g. a sentence. The pronunciation variants may also cover typical variants of pronunciations specific for a certain dialect or accent.

The pronunciation variants may be derived manually using linguistic knowledge. A disadvantage of this method is that new rules have to be derived manually for different regions where different pronunciation variants of speakers may occur other than those in the region for which the rules have been originally created. Alternatively, pronunciation variants may also be learned from large data sets using automatic procedures. This may help to improve the recognizer or processing performance, in particular the recognition rate, however, it often also imposes new problems since adding multiple pronunciations to the dictionary might also increase confusibility between the words. This leads to a low or decreased recognition rate.

US-B1-6,219,638 discloses a messaging system, wherein speech is received over a telephone and the speech is converted to text by a speech recognition system. The recognized text is then converted to speech by a speech synthesizer and played back to the user for correction by the user and a correction mechanism is provided for enabling the user to correct the speech such that the corrected speech is provided as text for transmittal over a communication system. However, even when using this system, the recognition rate is not satisfactory.

It is an object of the invention to improve the recognition rates of a speech recognition system, in particular, if a speaker does not use the canonical pronunciation forms. The reasons why the speaker does not use the canonical pronunciation may be of manifold nature, e. g. spontaneous speech, foreign accent, dialect.

To achieve this object, the invention provides a method for operating a speech processing system according to claim 1. In addition, the invention provides a speech processing system as defined in claim 5, a computer program product as defined in claim 6, and a computer readable storage medium as defined in claim 7. Further features and preferred embodiments are respectively defined in respective sublaims and/or in the following description.

A method for operating a speech processing system according to the invention comprises the steps of receiving a speech input of a user, that has an input speech feature structure, in particular a phonetic and/or prosodic feature structure, processing the received speech input, thereby generating evaluation data and a recognized speech feature structure of the input speech feature structure, generating a speech output depending on the evaluation data and depending on the recognized speech feature structure, wherein an output speech feature structure of the generated speech output is the same as the recognized speech feature structure.

Preferably, phonetic features, in particular phonemes, phonologic features, prosodic features and/or linguistic features are used as speech features within said input speech feature structure, said recognized speech feature structure, and/or said output speech feature structure.

Also, in a preferred embodiment, said evaluation data are generated to comprise a confidence measure and said speech output is only generated, if said confidence measure ranges below a first given or determined threshold value.

Further, the output speech feature structure of the generated speech output is preferably the same as the recognized speech feature structure and the output speech feature structure of the generated speech output is in correspondance with a stored speech feature structure which is stored in a lexicon and which represents a canonical pronunciation of said speech input.

Advantageously, the recognized speech feature structure is added to said lexicon, if - upon request - said user does not produce a speech input with an input speech feature structure which is similar to a stored speech feature structure already stored in said lexicon. Also, the added speech feature structure may be tagged with a speaker ID and the added speech feature structure is only used by the system, if said user is using the system, the user being identified by a speaker ID system.

In a preferred embodiment, said above-defined evaluation data are generated to comprise a confidence measure and said speech output or output speech feature structure are generated to be equal to the received speech input or input speech feature structure, if the confidence measure ranges below a second given or determined threshold value. Said second threshold value may for instance be lower than said first threshold value.

Further, said generated speech output is formulated as or is generated to at least comprise a question or request.

The speech processing system according to the invention is capable of performing or realizing the above described method for processing speech and/or the steps thereof.

The computer program product according to the invention comprises computer program means adapted to perform and/or to realize the above-described method of processing speech and/or the steps thereof, when it is executed on a computer, a digital signal processing means, and/or the like.

A computer readable storage medium comprises a computer program product as defined above.

The invention and advantageous details thereof will be explained by way of an exemplary embodiment thereof in the following with reference to the accompanying drawings, in which
- **Fig. 1**: shows a flowchart illustrating a first embodiment of the invention; and
- **Fig. 2**: shows a flowchart illustrating a second embodiment of the invention.

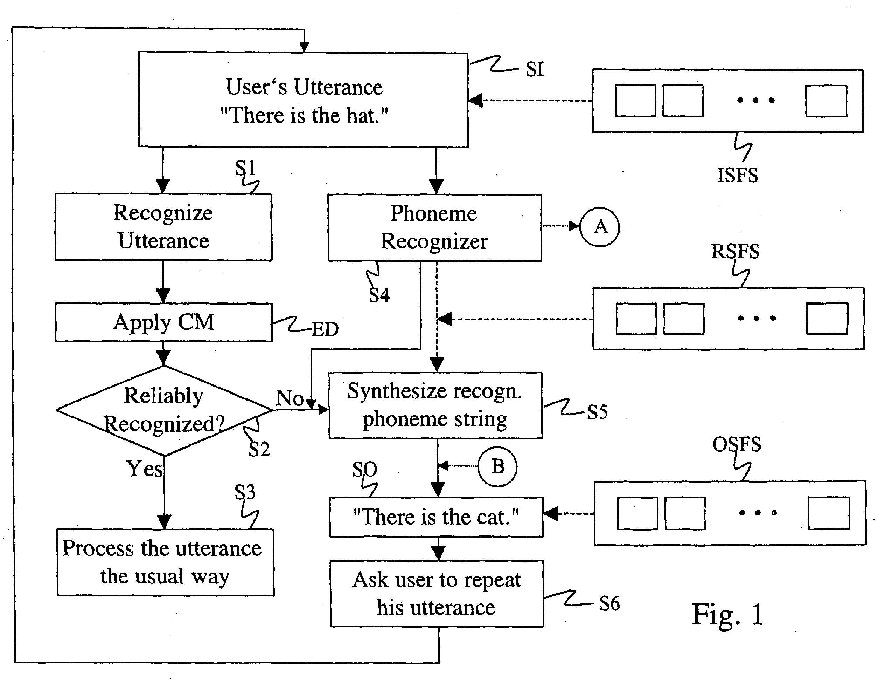

In Fig. 1, in a speech input step a speaker (user of the system) inputs a speech input SI (in the following also referred to as user's utterance) into the system. The speech input SI has a specific input speech feature structure ISFS. In the example of Fig. 1 the user's utterance input into the system is the sentence "There is the hat". Here, the speech features used to illustrate the invention are phonemes corresponding to the user's utterance. However, the invention is likewise applicable if the features are any of phonetic features, phonologic features, prosodic features and/or linguistic features. The phoneme structure, i.e. the input speech feature structure ISFS, of the example of the user's utterance is /De@'r Iz @ k{t/.

In an utterance recognition step SI an isolated or continuous speech recognizer is used to recognize the utterance. In the following step evaluation data ED is generated. In the example here, as evaluation data ED a confidence measure CM is used which measures the reliability of the recognized utterance. A high score for the confidence measure CM means that the recognition result has a high confidence. Other evaluation data ED could e. g. be a simple noise measure wherein the recognition result is not accepted, if a high noise occurred during recognition, like e.g. in a car at high speed.

In the following reliability checking step S2 the evaluation data ED, i. e. the confidence measure CM of the recognized utterance, is queried. If the confidence measure CM has a high value, i. e. the utterance has been recognized reliably, the utterance is processed the usual way in the processing step S3.

In parallel to the above described steps, i. e. the utterance recognition step S1, the determination of evaluation data ED, the reliability checking step S2, and the possible processing step S3, a phoneme recognizer is used in a phoneme recognition step S4. The phoneme recognizer outputs a symbol string representing a recognized speech feature structure RSFS. For the example utterance of above, the phoneme recognizer may have recognized the following sequence of phonemes: /De@'r Iz @ h{t/. The output of the phoneme recognizer, i. e. the recognized speech feature structure RSFS, is used as input for a synthesizing unit in a phoneme synthesizing step S5, only if the confidence measure CM has a value lower than a given threshold.

As mentioned above, if the confidence measure CM has a high value, the utterance is processed the usual way in the processing step S3. However, if the utterance is not reliably recognized, i. e. the confidence measure CM has a low value, a synthesizing unit is used to synthesize the recognized phoneme string, i. e. the recognized speech feature structure RSFS, in the phoneme synthesizing step S5.

The synthesizing unit outputs a speech output SO which is played to the user of the system. In the example considered here, the speech output SO is "There is the cat". This speech output SO has an output speech feature structure OSFS.

In a dialog system the speech output SO, i. e. a repetition of the speech input SI, could be embedded in a longer system utterance. Also just a part of the speech input, e. g. "the cat" could be output, if the confidence measure is low only for this particular part.

In a first embodiment of the invention the output speech feature structure OSFS is the same as the recognized speech feature structure RSFS, i. e. /De@'r Iz @ k{t/.

Then, in a feedback step S6 the user is asked to repeat his utterance. Since the user has listened to the speech output SO, here, "There is the cat", he may become aware of the pronunciation problems during recognition. In the example here, he might become aware that his pronunciation of the word "hat" was problematic for the system, since the speech output SO for this word was "cat". This means in a second attempt to input his sentence into the system, the speaker may adapt his pronunciation for the respective part of the utterance, here, the pronunciation of the word "hat", i.e. he might speak "hat" more clearly.

A particularly natural way to give feedback to the user regarding the pronunciation is to synthesize the word the system understood as a question, comparable to a human conversation, where one partner repeats what he understood if he is unsure of a correct understanding. In the example considered here, the system may output the question "Did you mean cat?". The word which is used in the question may be determined by a low CM, here this would be the word "cat", which really is "hat".

If the output of the utterance recognition step S1 provides multiple hypotheses, these hypotheses can be used, e. g. in the following way: "Did you say hat or cat?". This way the focus of attention of the user may be drawn to the problematic part of the utterance input into the system. When repeating the utterance, the user may direct his attention towards the crucial phonetic part of the word.

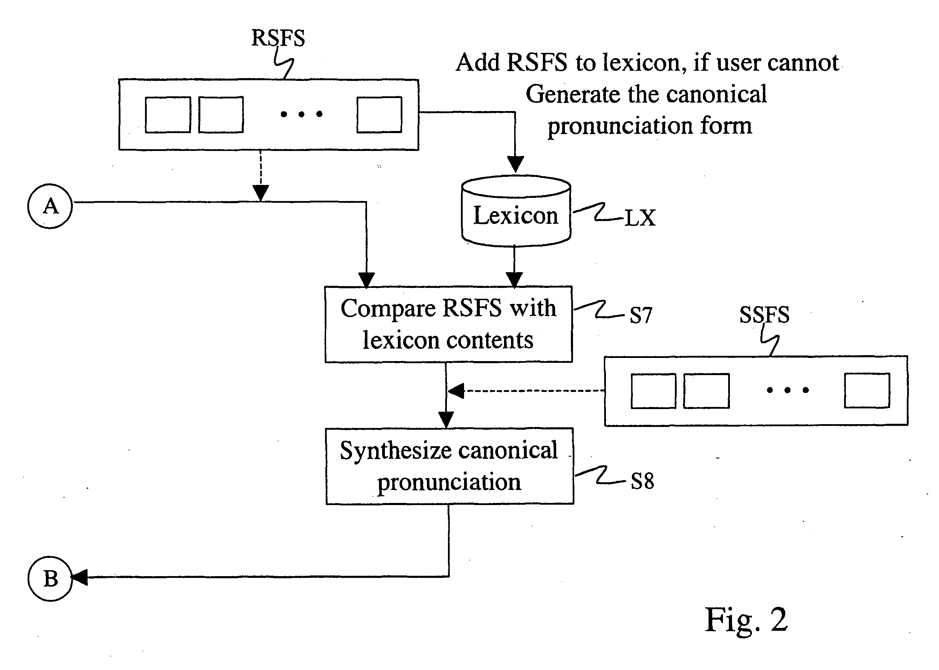

In a second embodiment of the invention, the output speech feature structure OSFS may be different from the recognized speech feature structure RSFS. In this second embodiment the phoneme synthesizing step S5 is not performed and instead the processing after the phoneme recognition step S4 continues in Fig. 2 at the point marked by "A". Accordingly, in the second embodiment of the invention the recognized speech feature structure RFSF is compared with the contents of a lexicon LX in a comparing step S7. The output of the comparing step S7 is a stored speech feature structure SSFS. This stored speech feature structure SSFS represents the canonical pronunciation of the user's utterance. In the example of above, the input speech feature structure ISFS of the example utterance "There is the hat." may have been /De@'z @ k{t/. This means the user said "There's the hat" instead of using the canonical pronunciation form which is "There is the hat", assuming that the recognition result from S1 was correct.

The stored speech feature structure SSFS, representing the canonical pronunciation of the utterance, is synthesized in a canonical synthesizing step S8, if the confidence measure CM ranges at a low value. This means, the speech output SO which is played to the user has the stored speech feature structure SSFS, i.e. the canonical pronuncation form of the speech input SI. In the example considered, the speech output has the output speech feature structure OSFS /De@' Iz @ k{t/.

The processing continues at the point marked by "B" in Fig. 1, i.e. now follows the feedback step S6, where the user is asked to repeat his utterance. Since he has now heard the canonical pronunciation of his utterance, he might adapt his pronunciation accordingly. This means, in the example he may now speaks "There is" instead of "There's".

If a speaker cannot adapt his pronunciation but positively acknowledges the question feedback, the found speaker-specific pronunciation, i. e. the respective recognized speech feature structure RSFS may be added to the dictionary, thus helping the recognizer to also understand this very speaker-specific pronunciation of a word and match it to the right corresponding word, which would not be possible if only the canonical pronunciation was included in the dictionary. The added speaker-specific pronunciation variants may be tagged with a speaker ID of the speaker. This tag can later, during recognition be used to restrict the use of a certain variant to the case where the same speaker is using the system again. This may be determined automatically by using a speaker ID system.

A particular advantage of the procedure described above is the fact that a speaker-specific pronunciation variant is only added to the dictionary, if the speaker cannot adapt his pronunciation to the canonical pronunciation form. This way, only necessary pronunciation variants of a word are added to the lexicon, thus reducing the amount of added pronunciation variants to a minimum. Therefore, the risk of the mentioned confusibility between words is minimised.

In the following some ideas of the invention are summarized:

State-of-the-art speech recognizers often use confidence measures CM to determine how reliable a recognition result was. This can be used to determine "uncertain" words in the recognition result. For these words a phoneme recognizer is used to re-recognize these words, outputting a phoneme string that is closest to the speakers pronunciation. This phoneme string is then synthesized and played to the speaker.

By listening to the "wrong" phoneme string (wrong here meaning deviating from the canonical pronunciation that is expected by the recognizer), the user might become aware of the problem and he/she might try to repeat the word/sentence with a "better" pronunciation.

This can further be supported by not synthesizing the pronunciation the speaker used alone, but also synthesizing the expected canonical pronunciation, so that the speaker has the direct comparison between the two pronunciations.

If the user can adapt his pronunciation, this is fine. However, this might be impossible for some speakers.

In this case the found speaker-specific pronunciation might be added to the dictionary, thus helping the recognizer to also understand this very speaker specific pronunciation and to match it to the right corresponding word, which would not be possible if only the canonical pronunciation was included in the dictionary. The added variant can be tagged with the speaker ID of the speaker who gave rise to the creation of that variant. This tag can later, during recognition, be used to restrict the use of the variant to the case where the same speaker is using the system again. This can be automatically determined by a speaker ID system.

A particularly natural way to feed back the pronunciation to the user would be to synthesize the word the system understood as a question, comparable to a human-human conversation, where one partner repeats what he understood if he is unsure if he understood correctly (e. g. "Did you mean cat", if he is not sure if it was "hat" or "cat". If multiple hypotheses are available, they can be used, e. g. in the generated utterance "Did you say hat or cat?". By using this, the focus of attention of the user when repeating the uncertain word will be directed toward the crucial phonetic part of the word. ;

## Claims

1. A method for operating a speech processing system
comprising the steps of
- receiving a speech input (SI) of a user, the speech input (SI) having an input phonetic and/or prosodic feature structure (ISFS),
- processing the received speech input (SI), thereby generating evaluation data (ED) and a recognized phonetic and/or prosodic feature structure (RSFS) of the input speech feature structure (ISFS),
- generating a speech output (SO) depending on the evaluation data (ED) and depending on the recognized phonetic and/or prosodic feature structure (RSFS),
- wherein an output phonetic and/or prosodic feature structure (OSFS) of the generated speech output (SO) is the same as the recognized phonetic and/or prosodic feature structure (RSFS).

2. The method according to claim 1,
**characterized in that**
said phonetic features comprise phonemes, phonologic features and/or linguistic features.

3. The method according to any one of the preceding claims,
**characterized in that**
- said evaluation data (ED) are generated to comprise a confidence measure (CM) and
- said speech output (SO) is only generated, if said confidence measure (CM) ranges below a first given or determined threshold value.

4. The method according to claim 3,
**characterized in that**
- said evaluation data (ED) are generated to comprise a confidence measure (CM) and
- said speech output (SO) is generated to be equal to the received speech input (SI), if the confidence measure (CM) ranges below a second given or determined threshold value, which is in particular lower than said first threshold value.

5. Speech processing system,
which is capable of performing or realizing a method for processing speech according to anyone of the preceding claims 1 to 4 and/or the steps thereof.

6. Computer program product,
comprising computer program means adapted to perform and/or to realize the method of processing speech according to anyone of the claims 1 to 4 and/or the steps thereof, when it is executed on a computer, a digital signal processing means, and/or the like.

7. Computer readable storage medium,
comprising a computer program product according to claim 6.

## Patentansprüche

1. Verfahren zum Betreiben eines Sprachverarbeitungssystems umfassend die folgenden Schritte
- Empfangen einer Spracheingabe (SI) eines Nutzers, wobei die Spracheingabe (SI) eine Eingabe-phonetische-und/oder-prosodische-Merkmalsstruktur (ISFS) aufweist,
- Verarbeiten der empfangenen Spracheingabe (SI), wodurch Evaluierungsdaten (ET) und eine erkannte phonetisch-und/oder-prosodische Merkmalsstruktur (RSFS) der Eingabesprachmerkmalsstruktur (ISFS) erzeugt wird,
- Erzeugen einer Sprachausgabe (SO) in Abhängigkeit von den Evaluierungsdaten (ED) und in Abhängigkeit von der erkannten phonetischen- und/oder-prosodischen Merkmalsstruktur (RSFS),
- wobei eine Ausgabe-phonetische-und/oder-prosodische-Merkmalsstruktur (OSFS) der erzeugten Sprachausgabe (SO) dieselbe ist wie die erkannte phonetische-und/oder-prosodische Merkmalsstruktur (RSFS).

2. Verfahren gemäß Anspruch 1, **dadurch gekennzeichnet, dass** die phonetischen Merkmale Phoneme, phonologische Merkmale und/oder linguistische Merkmale umfassen.

3. Verfahren gemäß einem der vorangehenden Ansprüche, **dadurch gekennzeichnet, dass**
- die Evaluierungsdaten (ED) erzeugt werden, um ein Vertrauensmaß (CM) zu umfassen, und
- die Sprachausgabe (SO) nur erzeugt wird, wenn das Vertrauensmaß (CM) sich unter einem ersten gegebenen oder bestimmten Schwellwert befindet.

4. Verfahren gemäß Anspruch 3, **dadurch gekennzeichnet, dass**
- die Evaluierungsdaten (ED) erzeugt werden, um ein Vertrauensmaß (CM) zu umfassen, und
- die Sprachausgabe (SO) erzeugt wird, um gleich der empfangenen Spracheingabe (SI) zu sein, wenn das Vertrauensmaß (CM) sich unterhalb eines zweiten gegebenen oder bestimmten Schwellwerts befindet, welcher insbesondere niedriger ist als der erste Schwellwert.

5. Sprachverarbeitungssystem, welches ein Verfahren zum Verarbeiten von Sprache gemäß einem der vorangehenden Ansprüche 1 bis 4 und/oder die Schritte davon durchführen oder realisieren kann.

6. Computerprogrammprodukt, welches Computerprogrammmittel umfasst, welche ausgelegt sind, um das Verfahren des Verarbeitens von Sprache gemäß einem der Ansprüche 1 bis 4 und/oder die Schritte davon durchzuführen und/oder zu realisieren, wenn es auf einem Computer, einer digitalen Signalverarbeitungseinrichtung und/oder ähnlichem ausgeführt wird.

7. Computerlesbares Speichermedium, umfassend ein Computerprogrammprodukt gemäß Anspruch 6.

## Revendications

1. Procédé pour faire fonctionner un système de traitement vocal
comprenant les étapes de :
réception d'une entrée vocale (SI) d'un utilisateur, l'entrée vocale (SI) ayant une structure de caractéristiques d'entrée phonétiques et/ou prosodiques (ISFS),
traitement de l'entrée vocale reçue (SI), générant ainsi des données d'évaluation (ED) et une structure de caractéristiques phonétiques et/ou prosodiques reconnues (RSFS) de la structure de caractéristiques vocales d'entrée (ISFS),
génération d'une sortie vocale (SO) en fonction des données d'évaluation (ED) et en fonction de la structure de caractéristiques phonétiques et/ou prosodiques reconnues (RSFS),
dans lequel la structure de caractéristiques de sortie phonétiques et/ou prosodiques (OSFS) de la sortie vocale générée (SO) est la même que la structure de caractéristiques phonétiques et/ou prosodiques reconnues (RSFS).

2. Procédé selon la revendication 1,
**caractérisé en ce que**
lesdites caractéristiques phonétiques comprennent des phonèmes, des caractéristiques phonologiques et/ou des caractéristiques linguistiques.

3. Procédé selon l'une quelconque des revendications précédentes,
**caractérisé en ce que**
lesdites données d'évaluation (ED) sont générées pour comprendre une mesure de confiance (CM) et
ladite sortie vocale (SO) est seulement générée, si ladite mesure de confiance (CM) s'étend en-dessous d'une première valeur de seuil donnée ou déterminée.

4. Procédé selon la revendication 3,
**caractérisé en ce que**
lesdites données d'évaluation (ED) sont générées pour comprendre une mesure de confiance (CM) et
ladite sortie vocale (SO) est générée pour être égale à l'entrée vocale reçue (SI), si la mesure de confiance (CM) s'étend en-dessous d'une seconde valeur de seuil donnée ou déterminée, qui est en particulier inférieure à ladite première valeur de seuil.

5. Système de traitement vocal,
qui est capable de mettre en oeuvre ou de réaliser un procédé pour traiter la voix selon l'une quelconque des revendications précédentes 1 à 4 et/ou les étapes de celles-ci.

6. Produit de programme d'ordinateur,
comprenant un moyen de programme d'ordinateur adapté pour réaliser et/ou mettre en oeuvre le procédé de traitement vocal selon l'une quelconque des revendications 1 à 4 et/ou les étapes de celles-ci, lorsqu'il est exécuté sur un ordinateur, un moyen de traitement de signal numérique, et/ou analogue.

7. Support de stockage lisible par ordinateur,
comprenant un produit de programme d'ordinateur selon la revendication 6.
